# EUROPÄISCHE PATENTANMELDUNG

(11) **EP 0 974 857 A1**
(43) Veröffentlichungstag der Anmeldung: **26.01.2000**
(21) Anmeldenummer: 99112570.9
(22) Anmeldetag: 01.07.1999
(51) Int. Cl.: G02B 6/44

(54) **Gehäuse für optische Faserspleisse**

(30) Priorität: 21.07.1998 DE 19832821
(71) Anmelder: SIEMENS AKTIENGESELLSCHAFT, 80333 München (DE)
(72) Erfinder: Dotzer, Peter, 82335 Berg (DE); Mayr, Ernst, 82319 Starnberg (DE)

(57) **Zusammenfassung**

Kabelgarnitur für ein Lichtwellenleiterkabel, welches an einem Seil einer Hochspannungsfreileitung verlegt ist.

Bei der Erfindung handelt es sich um eine Kabelgarnitur (KGN) für die Aufnahme von Lichtwellenleiterkabeln (LK1,LK2), deren Lichtwellenleiterspleiße und Überlängen (LU) bei Hochspannungsfreileitungen. Die Lichtwellenleiterkabel (LK1,LK2) sind jeweils mittels Anlaschband (LB) an einem Erdseil oder einem Phasenseil (PS) der Hochspannungsfreileitung angebracht und über einen Isolator (ISN) bei der Niederführung zur Kabelgarnitur (KGN) von der Hochspannung entkoppelt.

Die Kabelgarnitur besteht aus einem Oberteil und einem Unterteil mit Kabeleinlässen und einem Mittelteil aus Halbschalen. Je eine Rohrschelle ist zur Abdichtung zwischen dem einen Ende des Mittelteils und dem Oberteil und zwischen dem zweiten Ende des Mittelteils und dem Unterteil angebracht. Auf der nach innen weisenden Seite der Rohrschellen sind Dichtungsringe angeordnet.

## Beschreibung

Die Erfindung betrifft eine Kabelgarnitur für ein Lichtwellenleiterkabel, welches an einem Seil einer Hochspannungsfreileitung verlegt und im Bereich der Niederführung durch einen Isolator hindurchgeführt ist.

Kabelgarnituren zur Aufnahme von Lichtwellenleiterspleißen und Lichtwellenleiterüberlängen sind in großer Vielzahl bekannt, doch eignen sie sich meist nicht für einen sicheren Schutz bei der Niederführung in Hochspannungsanlagen. So werden neuerdings Lichtwellenleiterkabel eines sogenannten AD-Laschkabels (AD - ALL Dielectric) an einem Seil einer Hochspannungsfreileitung mit geeigneten Mitteln angelascht, zum Beispiel mit einem Wickelband. Bei der Niederführung eines solchen Lichtwellenleiterkabels ergeben sich nun Schwierigkeiten bezüglich der Hochspannungswerte. Es muß besonders bei der Anlaschung an ein Phasenseil der Hochspannungsfreileitung sichergestellt sein, daß volle Sicherheit beim Berühren des niedergeführten Lichtwellenleiterkabels wie auch der verwendeten Kabelgarnitur gegeben ist. So ist beispielsweise bereits aus der deutschen Offenlegungsschrift DE-A-196 48 755 bekannt, daß bei der Niederführung eines an einem Phasenseil einer Hochspannungsfreileitung angelaschten Lichtwellenleiterkabels ein Isolator verwendet wird, durch den das Lichtwellenleiterkabel bzw. deren Lichtwellenleiter hindurchgeführt werden. Der Kabelmantel wird dabei abgesetzt und nur die Lichtwellenleiter, gegebenenfalls zusammen mit einer sie umgebenden Hülle werden weitergeführt. Bei Verwendung von herkömmlichen Kabelgarnituren müßte diese anschließend sofort in großer Höhe am Mast montiert werden, um Berührungssicherheit und Schutz gegen Vandalismus gewährleisten zu können.

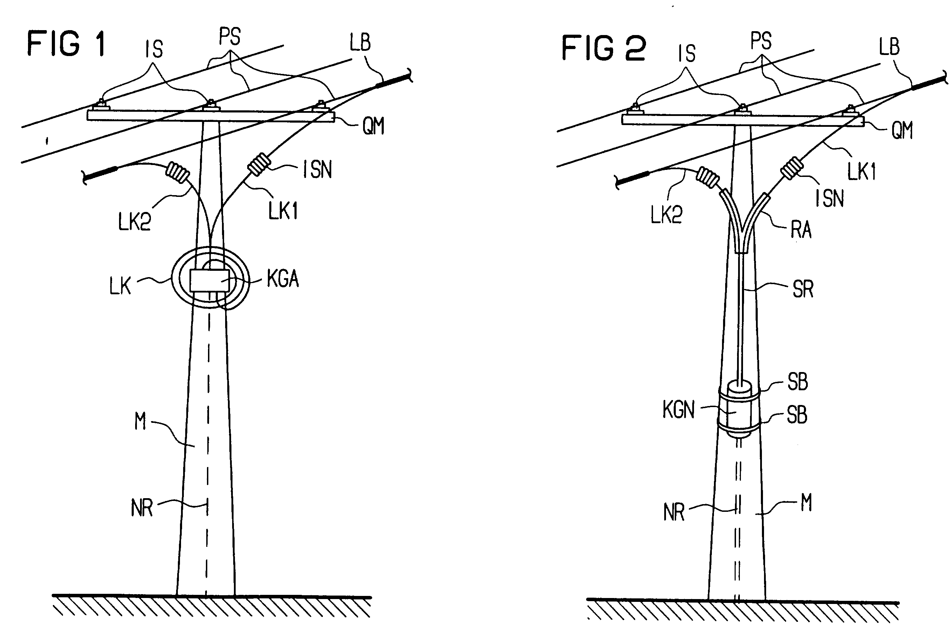

Dies bedeutet jedoch, daß das Lichtwellenleiterkabel mit großer Überlänge im Bereich der montierten Kabelgarnitur angeordnet werden müßte; denn die Überlänge muß ausreichen, um am Boden entsprechende Spleiß- oder Servicearbeiten durchführen zu können. Die Überlänge dieses Lichtwellenleiterkabels wurde wie in der Figur 1 schematisch dargestellt ist, mit bzw. an der Kabelgarnitur in Schlaufen an einem sogenannten Kabelkreuz abgelegt.

Für vorliegende Erfindung stellt sich nun die Aufgabe, eine Kabelgarnitur in ihrer Ausführung und in ihrer Montageposition zu schaffen, bei der die Montagearbeiten und die Erreichbarkeit verbessert, der Schutz und die Sicherheit bei Hochspannungsfreileitungen im Niederführungsbereich von Lichtwellenleiterkabeln erhöht werden. Die gestellte Aufgabe wird gemäß der Erfindung mit einer Kabelgarnitur der eingangs erläuterten Art dadurch gelöst, daß ein Oberteil und ein Unterteil mit Kabeleinlässen an einer am Mast der Hochspannungsfreileitung zu befestigenden Halterung im Abstand voneinander angeordnet sind, daß ein Mittelteil aus Halbschalen mit Längsdichtungen zwischen dem Oberteil und dem Unterteil angeordnet ist, daß je eine Rohrschelle zur Abdichtung zwischen dem einen Ende des Mittelteils und dem Oberteil und zwischen dem zweiten Ende des Mittelteils und dem Unterteil angeordnet ist, daß jeweils Dichtungsringe auf der nach innen weisenden Seite der Rohrschellen angeordnet sind und daß Dichtungsmasse in die Kabeleinlässe einspritzbar ist.

Die Kabelgarnitur gemäß der Erfindung ist im Aufbau als Verbindungs- oder Abzweiggarnitur für ein Lichtwellenleiterkabel konzipiert, wobei das Lichtwellenleiterkabel an einem Leiterseil einer Hochspannungsfreileitung mit Hilfe eines Wickelbandes angelascht ist. Die Ausführung gemäß der Erfindung ist besonders montagefreundlich für diesen Zweck aufgebaut, kann gut an einem Mast in zugänglicher Höhe installiert werden und ist trotzdem gegen Vandalismus gesichert. Die Kabelgarnitur gemäß der Erfindung ist in der voll dielektrischen Ausführung auch dafür geeignet, Lichtwellenleiterkabel aufzunehmen, die an einem Phasenseil der Hochspannungsfreileitung angelascht sind. Im Mittelspannungsbereich werden hauptsächlich Holz- oder Betonmaste für die Hochspannungsfreileitung verwendet und die Kabelgarnitur wird in einer Höhe von ca. 2 bis 3 m befestigt. Um die dünnen Lichtwellenleiterkabel gegen Vandalismus ausreichend zu schützen, werden diese in zerstörungssicheren Rohren zugeführt. Das Gehäuse der Kabelgarnitur und gegebenenfalls die Zuleitungsrohre für die Kabel sind aus glasfaserverstärktem Kunststoff, vorzugsweise aus Polyester. Das Gehäuse wird zweckmäßigerweise im Pulltrusionsverfahren hergestellt. Die Kabelgarnitur besteht im wesentlichen aus einem zylindrischen Oberteil, einem zylindrischen Unterteil und einem dazwischen einzusetzenden Mittelteil, das aus zwei Halbschalen gebildet wird. Das Oberteil und das Unterteil sind an den Abschlußseiten mit Kabeleinlässen versehen, die asymmetrisch angeordnet sind, so daß sie sich nach der Montage nahe am Mast befinden. Dadurch kann die Einführung der Lichtwellenleiterkabel in die Kabeleinlässe der Kabelgarnitur ohne wesentliche Ausbiegung erfolgen. Das Mittelteil der Kabelgarnitur besteht aus zwei Hälften, die nach der Beendigung der Spleißarbeiten unter Verwendung einer geeigneten, nicht aushärtenden Dichtungsmasse zusammengefügt und zwischen das Oberteil und das Unterteil eingesetzt werden. Im Oberteil und im Unterteil ist jeweils ein zylindrisches Führungsteil eingesetzt, an dem die Halbschalen ausgerichtet werden. In die Dichtungsbereiche der Halbschalen werden zweckmäßigerweise Reißfäden, vorzugsweise aus Aramid, mit Quellpulver eingelegt, so daß eine spätere Öffnung montagefreundlich erfolgen kann.

Das Oberteil und das Unterteil werden bei der Montage der Kabelgarnitur zunächst am Mast befestigt, wobei eine entsprechende Halterung vorgesehen ist, die besonders einfach mit Spannbändern am Mast befestigt werden kann. Außerdem ist dabei von Vorteil, daß bei Verwendung einer solchen Halterung der Abstand für das Mittelteil vorgegeben ist. Die Kabeleinlässe werden durch Verguß mit einer entsprechenden Vergußmasse wie zum Beispiel einem flexiblen Polyurethan-Harzgemisch versehen und dadurch abgedichtet. In einer weiteren Ausführungsform kann die Abdichtung auch durch Einspritzen von Dichtungsmasse in entsprechende Dichtungskanäle der Kabelgarnitur, insbesondere der Längsabdichtungen im Mittelteilbereich, erfolgen.

Im Inneren der Kabelgarnitur gemäß der Erfindung können prinzipiell alle Arten von Spleißhilfen, Spleißhalterungen und Überlängenanordnungen eingesetzt werden, doch eignet sich hierfür besonders ein multifunktionaler Modul (MFM). Dieser multifunktionale Modul enthält entsprechende Ablagen für Lichtwellenleiterüberlängen und für Ablagen von Lichtwellenleiterspleißen.

Üblicherweise werden die Spleißarbeiten am Boden vorgenommen. Wegen der niedrigen Montagehöhe ergibt sich hier ein besonderer Vorteil, so daß im Verhältnis nur geringe Überlängen unterzubringen sind. Dadurch erübrigt sich die frühere Ablage von Überlängen an einem sogenannten Luftkabelkreuz in großer Höhe am Mast. Auch die Montage des gesamten Systems ist in einfacher Weise auszuführen, wobei sich folgender Montageablauf ergibt. Zunächst werden die Schutzrohre am Mast befestigt und das niederzuführende Lichwellenleiterkabel darin eingezogen. Anschließend wird das Oberteil und das Unterteil, vorzugsweise mit dem entsprechenden Halter am Mast montiert. Bei Montage mit dem entsprechenden Halter ist der erforderliche Abstand für das Mittelteil automatisch gegeben, während bei Montage ohne Halterung das Oberteil und das Unterteil im erforderlichen Abstand montiert werden müssen. Anschließend wird das Lichtwellenleiterkabel abgemantelt, die entsprechenden Lichtwellenleiter gespleißt, die Spleiße im Spleißhalter abgelegt und die Lichtwellenleiterüberlängen eingelegt. In einem weiteren Montageschritt wird die Dichtungsmasse in den Dichtungsbereichen des Mittelteils aufgetragen und die Halbschalen zusammengesetzt. Der Verschluß und die Abdichtung des Mittelteils zum Oberteil zw. Unterteil erfolgt durch Schließen der Rohrschellen, wobei die umlaufenden Dichtungen eingepreßt werden. Schließlich werden die Ein- und Ausgänge mit Dichtungsmasse aufgefüllt. Bei Bedarf können die Rohrschellen mit einem Schloß versehen werden, so daß die Kabelgarnitur vor unberechtigtem Öffnen geschützt ist. Eine derartige Kabelmuffe hat im allgemeinen eine Längenausdehnung von 400 mm und einen Durchmesser von etwa 100m.

Die Erfindung wird nun anhand von fünf Figuren näher erläutert.
- Figur 1: zeigt die Niederführung im Stand der Technik
- Figur 2: zeigt die Niederführung mit einer erfindungsgemäßen Kabelgarnitur.
- Figur 3: zeigt die Kabelgarnitur in teilgeöffnetem Zustand
- Figur 4: zeigt das Oberteil und das Unterteil der Kabelgarnitur an einer Halterung.
- Figur 5: zeigt einen Querschnitt durch den aus Halbschalen bestehenden Mittelteil.

In Figur 1 wird der Stand der Technik beim Niederführen eines Lichtwellenleiterkabels gezeigt. Hieraus ist ersichtlich, daß ein mit Laschband LB bzw. einem anderen Wickelband an einem Phasenseil PS einer Hochspannungsfreileitung angelaschtes Lichtwellenleiterkabel LK1 in eine am Mast M befestigte Kabelgarnitur KGA niedergeführt wird. Das Lichtwellenleiterkabel LK1 wird dabei durch einen Isolator ISN hindurchgeführt, wobei der Kabelmantel des Lichtwellenleiterkabels LK1 unterbrochen wird und nur die in gefüllter Aderhülle befindlichen Lichtwellenleiter hindurchgeführt werden. Auf diese Weise erfolgt die Entkopplung von der Hochspannung. In der Kabelgarnitur KGA wird die Spleißung und/oder Weiterführung des Lichtwellenleiterkabels vorgenommen und zum Beispiel als Lichtwellenleiterkabel LK2 wieder weitergeführt und am Phasenseil des nächsten Hochspannungsfeldes wieder angelascht. Es ist bei dieser Anordnung erkennbar, daß die Kabelgarnitur KGA in großer Höhe am Mast M befestigt ist, um sie vor fremdem Zugriff oder Vandalismus zu schützen. Da jedoch die Spleißarbeiten oder sonstigen Servicearbeiten am Boden durchgeführt werden, muß dafür eine entsprechend große Überlänge an Lichtwellenleiterkabel LK vorhanden sein. Diese Überlänge wird bisher an einem sogenannten Luftkabelkreuz in der Höhe der installierten Kabelgarnitur KGA angebracht. Es ist weiterhin angedeutet, daß auch Lichtwellenleiterkabel innerhalb eines Niederführungsrohres NR zum Erdboden geführt werden können.

Die Figur 2 zeigt dagegen eine Kabelgarnitur KGN gemäß der Erfindung, die in niedriger Höhe von ca. 2 bis 3 m am Mast M angebracht werden kann, da sowohl die Niederführung wie auch die Kabelgarnitur in entsprechend geschützter Ausführung verwendet werden. Damit kann auch auf die Überlänge am Lichtwelenleiterkabel verzichtet werden, da die viel geringere Überlänge als lose Lichtwellenleiter innerhalb der Kabelgarnitur KGN in einem geeigneten multifunktionalen Modul abgelegt werden können. Die Niederführung des Lichtwellenleiterkabels LK1 wie auch die Wiederzuführung des Lichtwellenleiterkabels LK2 erfolgen zumindest in einem schlagfesten Schutzrohr SR. Eine etwa erforderliche Niederführung zum Erdboden erfolgt ebenfalls in einem schlagfesten Niederführungsrohr NR. Das Schutzrohr SR wie auch das Niederführungsrohr NR werden direkt in die Kabeleinlässe KE der Kabelgarnitur KGN eingeführt, wo die Abdichtung vorgenommen wird. Auch hier werden die abgeführten und zugeführten Lichtwellenleiterkabel LK1 und LK2 durch Isolatoren ISN hindurchgeführt. Die Verzweigung der Lichtwellenleiterkabel wird mit einem Y-förmigen Rohrausgang RA vorgenommen. Die Anlaschung der Lichtwellenleiterkabel LK1 und LK2 erfolgt wieder mit der an sich bekannten Anlaschmethode an einem über Isolatoren IS am Quermast QM befestigten Phasenseil PS. Die Kabelgarnitur KGN wird mit Spannbändern SB am Mast befestigt.

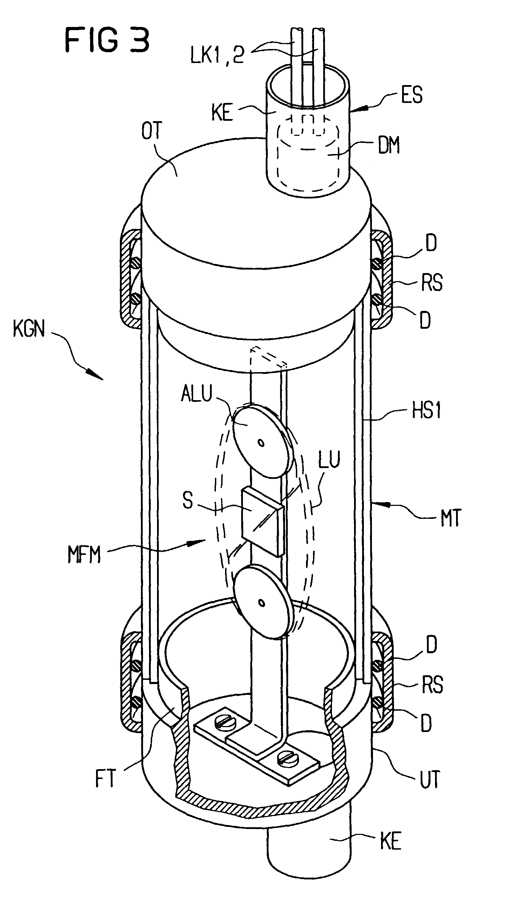

In Figur 3 werden die Einzelheiten der Kabelgarnitur KGN gemäß der Erfindung erläutert. Diese Kabelgarnitur KGN besteht aus einem Oberteil OT, einem Unterteil UT und einem dazwischen eingesetzten Mittelteil MT, das vorzugsweise aus zwei Halbschalen HS1 und HS2 gebildet ist, wobei die zweite Halbschale HS2 hier nicht sichtbar ist. Oberteil OT und Unterteil UT sind zunächst auf Abstand gehalten, der der Höhe des Mittelteils MT entspricht. Nachdem die Servicearbeiten an den eingeführten Lichtwellenleiterkabeln LK durchgeführt worden sind, werden die Halbschalen eingesetzt, die sich an Führungsteilen FT im Oberteil OT und im Unterteil UT befinden. Nach Einlegen der Längsdichtungen in die Längsdichtungsbereiche zwischen den Halbschalen HS werden die Rohrschellen RS zwischen dem Oberteil OT und dem oberen Ende des Mittelteils MT und zwischen dem Unterteil UT und dem unteren Ende des Mittelteils MT geschlossen, wobei durch je zwei innen eingesetzte, umlaufende Dichtungen D die Abdichtungen erfolgen. Die Kabeleinführungen KE werden mit Dichtungsmasse DM aufgefüllt, vorzugsweise durch Einspritzen durch eine Einspritzöffnung ES. Vor dem Schließen werden die Lichtwellenleiterspleiße auf einem Spleißhalter S und die Lichtwellenleiterüberlängen LU in einer Überlängenaufnahme ALU abgelegt und fixiert.

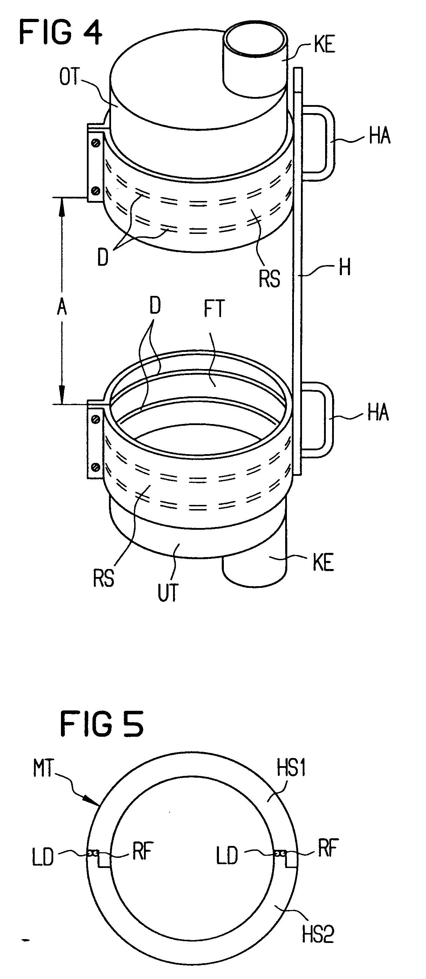

Figur 4 verdeutlicht eine Ausführung gemäß der Erfindung, bei der das Oberteil OT und das Unterteil UT an einer Halterung H bereits im erforderlichen Abstand A für das einzusetzende Mittelteil fixiert sind. Die Halterung H hat beispielsweise zwei Ansätze HA zur Aufnahme von Spannbändern für die Befestigung am Mast. Außerdem sind hier auch die Rohrschellen RS bereits mit befestigt, so daß die Montage erheblich erleichtert wird. Innerhalb der Rohrschelle RS sind unter Umständen auch die paarweise umlaufenden Dichtungen D eingebracht, wobei jeweils eine Dichtung D auf dem Mittelteil und die zweite Dichtung D auf dem Oberteil bzw. dem Unterteil aufliegen. Im Unterteil UT ist weiterhin das Führungsteil FT erkennbar, an dem die Halbschalen des Mittelteils abgestützt werden. Hier ist auch ersichtlich, daß die Kabeleinlässe KE exzentrisch in den Stirnseiten des Oberteils OT bzw. Unterteils UT angeordnet sind, so daß die Öffnungen für die Einführung der Lichtwellenleiterkabel nahe am Mast liegen und die Lichtwellenleiterkabel ohne große Ausbiegung eingeführt werden können.

Figur 5 zeigt im Querschnitt die z.B. pulltrudierten Halbschalen HS1 und HS2 des Mittelteiles MT. Die Längskanten sind beispielsweise als abgesetzte Kanten ausgebildet um gegenseitiges Verrutschen zu verhindern. Weiterhin sind die Längskanten z.B. mit Anformungen für die Längsdichtungen LD versehen, wobei beispielsweise Reißfäden RF aus Aramid mit eingelegt werden. Die Reißfäden RF dienen als Hilfe beim Öffnen der Kabelgarnitur, d.h. bei der Trennung der Halbschalen HS1 und HS2.

## Patentansprüche

1. Kabelgarnitur für ein Lichtwellenleiterkabel, welches an einem Seil (PS) einer Hochspannungsfreileitung verlegt und im Bereich der Niederführung durch einen Isolator hindurchgeführt ist,
**dadurch gekennzeichnet,**
daß ein Oberteil (OT) und ein Unterteil (UT) mit Kabeleinlässen (KE) an einer am Mast (M) der Hochspannungsfreileitung zu befestigenden Halterung (H) im Abstand (A) voneinander angeordnet sind, daß ein Mittelteil (MT) aus Halbschalen (HS1, HS2) mit Längsdichtungen (LD) zwischen dem Oberteil (OT) und dem Unterteil (UT) angeordnet ist, daß je eine Rohrschelle (RS) zur Abdichtung zwischen dem einen Ende des Mittelteils (MT) und dem Oberteil (OT) und zwischen dem zweiten Ende des Mittelteils (MT) und dem Unterteil (UT) angeordnet ist, daß jeweils Dichtungsringe (D) auf der nach innen weisenden Seite der Rohrschellen (PS) angeordnet sind und daß Dichtungsmasse (DM) in die Kabeleinlässe (KE) einspritzbar ist.

2. Kabelgarnitur nach Anspruch 1,
**dadurch gekennzeichnet,**
daß ein flexibles Polyurethan-Gemisch als Dichtungsmasse (DM) verwendet ist.

3. Kabelgarnitur nach Anspruch 1,
**dadurch gekennzeichnet,**
daß die Halterung (H) Ansätze (HA) zur Aufnahme von Spannbändern (SB) für die Mastbefestigung aufweist.

4. Kabelgarnitur nach einem der vorhergehenden Ansprüche,
**dadurch gekennzeichnet,**
daß der Kabeleinlaß (KE) des Oberteils (OT) an ein Schutzrohr (SR) anschließt.

5. Kabelgarnitur nach einem der vorhergehenden Ansprüche,
**dadurch gekennzeichnet,**
daß Dichtungsringe (D) aus elastischem Material, vorzugsweise aus Silikon, als Dichtungen unter den Rohrschellen (RS) angeordnet sind.

6. Kabelgarnitur nach einem der vorhergehenden Ansprüche,
**dadurch gekennzeichnet,**
daß ein multifunktionaler Modul (MFM) für Lichtwellenleiterspleiße, bestehend aus mindestens einem Spleißhalter (SH) und einer Aufnahme (ALU) für Lichtwellenleiterüberlängen (LU) angeordnet ist.

7. Kabelgarnitur nach einem der vorhergehenden Ansprüche,
**dadurch gekennzeichnet,**
daß das Oberteil (OT) und das Unterteil (UT) an der Halterung (H) in dem durch die Länge des Mittelteils (MT) bestimmten Abstand (A) fest fixiert sind.

8. Kabelgarnitur nach Anspruch 7,
**dadurch gekennzeichnet,**
daß die Rohrschellen (RS) an der Halterung (H) fixiert sind.

9. Kabelgarnitur nach einem der vorhergehenden Ansprüche,
**dadurch gekennzeichnet,**
daß Reißfäden (RF), vorzugsweise aus Aramid, mit den aus elastischem Material, vorzugsweise aus Silikon, bestehenden Längsdichtungen (LD) zwischen den Halbschalen (HS1, HS2) des Mittelteils (MT) angeordnet sind.

10. Kabelgarnitur nach einem der Ansprüche 1 bis 8,
**dadurch gekennzeichnet,**
daß die Dichtungen in den Dichtungsbereichen aus spritzbarem Kunststoff eingespritzt sind.

11. Kabelgarnitur nach einem der vorhergehenden Ansprüche,
**dadurch gekennzeichnet,**
daß die Rohrschellen (RS) mit einem absperrbaren Verschluß versehen sind.

12. Kabelgarnitur nach einem der vorhergehenden Ansprüche,
**dadurch gekennzeichnet,**
daß Oberteil (OT), Unterteil (UT) und Mittelteil (MT) aus schlagfestem Kunststoff, vorzugsweise aus glasfaserverstärktem Polyester, bestehen.

13. Kabelgarnitur nach einem der Ansprüche 1 - 11,
**dadurch gekennzeichnet,**
daß Oberteil (OT), Unterteil (UT) und Mittelteil (MT) aus Metall, vorzugsweise aus Aluminiumspritzguß, bestehen.

14. Kabelgarnitur nach einem der vorhergehenden Ansprüche,
**dadurch gekennzeichnet,**
daß mindestens ein an einem Phasenseil (PS) mit Laschband (LB) angelaschtes Lichtwellenleiterkabel (LK) eingeführt ist.

15. Kabelgarnitur nach einem der Ansprüche 1 - 13,
**dadurch gekennzeichnet,**
daß ein am Erdseil mit Laschband (LB) angelaschtes Lichtwellenleiterkabel (LK) eingeführt ist.

16. Kabelgarnitur nach einem der vorhergehenden Ansprüche,
**dadurch gekennzeichnet,**
daß das eingeführte Lichtwellenleiterkabel (LK) vor der Einführung in die Kabelgarnitur (KGN) durch einen Isolator (ISN) geführt ist, wobei der Kabelmantel des Lichtwellenleiterkabels (LK1, LK2) abgesetzt ist.

17. Kabelgarnitur nach einem der vorhergehenden Ansprüche,
**dadurch gekennzeichnet,**
daß ein Lichtwellenleiterkabel aus dem nach abwärts weisenden Kabeleinlaß (KE) vorzugsweise in einem Niederführungsrohr (NR) abgeführt ist.
